# EUROPEAN PATENT APPLICATION

(11) **EP 4 385 957 A1**
(43) Date of publication of application: **19.06.2024**
(21) Application number: 22213060.1
(22) Date of filing: 13.12.2022
(51) Int. Cl.: C03C 3/087, C03C 4/20, A61J 1/00

(54) **ALUMINOSILICATE GLASS**

(71) Applicant: SCHOTT AG, 55122 Mainz (DE)
(72) Inventor: Grimm, Malte, 95666 Mitterteich (DE); Eichholz, Rainer Erwin, 60323 Frankfurt am Main (DE); Hochrein, Oliver, 55130 Mainz (DE); Krüger, Susanne, 55127 Mainz (DE)
(74) Representative: Fuchs Patentanwälte Partnerschaft mbB

(57) **Abstract**

The present invention relates to an aluminosilicate glass having excellent hydrolytic resistance and low devitrification tendency. The invention also relates to a method of producing the glass and to uses of the glass, in particular for pharmaceutical packaging.

## Description

The present invention relates to an aluminosilicate glass having excellent hydrolytic resistance and low devitrification tendency. The invention also relates to a method of producing the glass and to uses of the glass, in particular for pharmaceutical packaging.

### Background

Glass articles used in the medical, especially pharmaceutical, field must meet stringent quality criteria. Articles for pharmaceutical primary packaging such as vials, ampoules, cartridges and syringes must exhibit high transparency, good sterilizability and excellent chemical resistance. Furthermore, the glass must not change the quality of the material contained by or in contact with it in such a way that prescribed thresholds are exceeded, i.e. the glass material must not release any substances in quantities which, for example, impair the efficacy and stability of a contained drug or even render it toxic.

It is therefore desirable, to provide glass with improved hydrolytic resistance for pharmaceutical containers. Such desired glass should in particular exhibit high transparency and at the same time should be producible in a cost-efficient manner.

Glasses frequently used in the pharmaceutical industry are borosilicate glasses (so-called neutral glasses), with the principal components silicon oxide and boron oxide, but which may also contain aluminum, alkali metal and alkaline earth oxides.

Aluminosilicate glasses are also known. However, the disadvantage of aluminosilicate glasses known from the state of the art is that they provide lower hydrolytic resistance compared to for example borosilicate glasses. Another disadvantage of aluminum silicate glasses of the state of the art is that in order to provide glasses with high transparency, cost-intensive raw materials are needed. If less cost-intensive raw materials are used, the glasses often exhibit an undesired color tinge.

Another problem frequently encountered in the prior art is that measures that improve the hydrolytic resistance are at same time associated with an increased devitrification tendency of the glass.

The object of the present invention is therefore to avoid the above-mentioned disadvantages of the prior art and to provide a glass which meets the stringent quality criteria in the medical, especially pharmaceutical, field. In particular, the glass article should be suitable for use as a pharmaceutical primary packaging and exhibit high transparency with neutral white color impression, whilst at the same time be producible with less cost-intensive raw materials. The glass should be processible with tube drawing methods in an excellent manner.

The object is solved by the subject-matter disclosed herein.

### Details of invention

The invention provides a glass having excellent hydrolytic resistance. Thus, the glass meets the stringent quality criteria in the medical, especially pharmaceutical, field. The glass of the invention has very low devitrification tendency. Therefore, the glass can be processed with tube drawing methods in an excellent manner. The glass of the invention can be produced with less cost-intensive raw materials and still provides a very low color tinge resulting in a neutral white color impression.

Preferably, the glass of the invention comprises the following components in the indicated amounts (in mol% based on oxides):

| **Component** | **Min** | **Max** |
|---|---|---|
| SiO₂ | 64.5 | 73.0 |
| Al₂O₃ | 4.0 | 11.0 |
| B₂O₃ | 0 | 0.2 |
| Na₂O | 0 | 3.5 |
| K₂O | 0 | 4.0 |
| MgO | 0.1 | 7.0 |
| CaO | 3.0 | 15.0 |
| SrO | 0 | 10.0 |
| BaO | 0 | 5.0 |
| ZnO | 0 | 0.5 |
| R₂O | 0.1 | 7.5 |
| RO | >15.0 | 22.5 |

wherein R₂O indicates the sum of the molar amounts of Na₂O and K₂O, and wherein RO indicates the sum of the molar amounts of MgO, CaO, SrO, BaO and ZnO.

The glass of the invention is an aluminosilicate glass, i.e. it contains substantial amounts of SiO₂ and Al₂O₃. The glass further comprises alkali metal oxides and alkaline earth metal oxides. Other components are optionally present. The glass comprises only very limited amounts of B₂O₃ or is preferably free of B₂O₃.

If the amount of SiO₂ is very low, the chemical resistance, in particular the hydrolytic resistance may be reduced. If the amount of SiO₂ is very high, the processing temperature (German: "Verarbeitungstemperatur (VA)") is increased so that production may be impaired. Preferably, the amount of SiO₂ is a range of from 64.5 to 73.0 mol%, more preferably from 65.0 to 72.5 mol%, more preferably from 66.0 to 72.0 mol%, more preferably from 66.5 to 71.0 mol%, more preferably from 67.0 to 70.0 mol%. The amount of SiO₂ is preferably at least 64.5 mol%, more preferably at least 65.0 mol%, more preferably at least 66.0 mol%, more preferably at least 66.5 mol%, more preferably at least 67.0 mol%. The amount of SiO₂ is preferably at most 73.0 mol%, more preferably at most 72.5 mol%, more preferably at most 72.0 mol%, more preferably at most 71.0 mol%, more preferably at most 70.0 mol%.

The amount of Al₂O₃ should not be very high because aluminosilicate glasses often have a higher melting temperature as compared to borosilicate glasses. In particular, the glass may be difficult to melt, a higher energy input may be necessary, and/or shaping may be difficult due to an increased processing temperature (VA) if the amount of Al₂O₃ is very high. Moreover, the devitrification tendency may be increased if the amount of Al₂O₃ is very high. In contrast, if the amount of Al₂O₃ is very low, the chemical resistance may be impaired. Preferably, the amount of Al₂O₃ is in a range of from 4.0 to 11.0 mol%, more preferably from 5.0 to 10.8 mol%, more preferably from 6.0 to 10.6 mol%, more preferably 6.5 to 10.5 mol%, more preferably 7.0 to 10.5 mol%, more preferably from 7.0 to 10.4 mol%, more preferably from 8.0 to 10.2 mol%. Preferably, the amount of Al₂O₃ is as least 4.0 mol%, more preferably at least 5.0 mol%, more preferably at least 6.0 mol%, more preferably at least 6.5 mol%, more preferably at least 7.0 mol%, more preferably at least 8.0 mol%. Preferably, the amount of Al₂O₃ is at most 11.0 mol%, more preferably at most 10.8 mol%, more preferably at most 10.6 mol%, more preferably at most 10.5 mol%, more preferably at most 10.4 mol%, more preferably at most 10.2 mol%.

The glasses of the invention comprise only very limited amounts of B₂O₃. The molar amount of B₂O₃ is preferably at most 0.2 mol%, more preferably at most 0.15 mol%, more preferably at most 0.1 mol%, more preferably at most 0.05 mol%. Even more preferably, the glasses of the invention are free of B₂O₃.

Alkali metal oxides improve the devitrification resistance when used in limited amounts. High amounts of alkali metal oxides are not preferred and may have the opposite effect. This is particularly the case for Na₂O. Moreover, the hydrolytic resistance may be impaired by high amounts of alkali metal oxides. Alkali metal oxides commonly used in glasses are Li₂O, Na₂O and K₂O. However, while the glasses of the invention may comprise Li₂O, for example in an amount of from 0.1 mol-% to 0.5 mol-%, the glasses are preferably free of Li₂O. Li₂O is associated with increased costs and its availability may be limited, in particular due to alternative applications such as lithium-ion batteries. Preferably, the amount of Li₂O is at most 0.5 mol%, more preferably at most 0.2 mol%, more preferably at most 0.1 mol%. More preferably, the glasses are free of Li₂O.

In view of the above, the term "R₂O" as used in the present disclosure refers to the sum of the molar amounts of Na₂O and K₂O. Preferably, the amount of R₂O is in a range of from 0.1 to 7.5 mol%, more preferably from 0.1 to 7.0 mol%, more preferably from 0.1 to 6.5, more preferably from 0.1 to 6.0 mol%, more preferably from 0.1 to 5.5 mol%, more preferably from 0.2 to 5.0 mol%, for example from 0.5 to 5.0 mol%, from 1.0 to 5.0 mol%, from 1.5 to 5.0 mol%, from 2.0 to 5.0 mol%, from 2.5 to 5.0 mol%, from 3.0 to 5.0 mol%, from 3.5 to 5.0 mol%, or from 0.2 to 3.5 mol%, from 0.2 to 3.0 mol%, from 0.2 to 2.5 mol%, from 0.2 to 2.0 mol%, from 0.2 to 1.5 mol%, from 0.2 to 1.0 mol%, or from 0.2 to 0.5 mol%. The amount of R₂O is preferably at least 0.1 mol%, more preferably at least 0.2 mol%, for example at least 0.5 mol%, at least 1.0 mol%, at least 1.5 mol%, at least 2.0 mol%, at least 2.5, at least 3.0 mol% or at least 3.5 mol%. The amount of R₂O is preferably at most 7.5 mol%, more preferably at most 7.0 mol%, more preferably at most 6.5 mol%, more preferably at most 6.0 mol%, more preferably at most 5.5 mol%, more preferably at most 5.0 mol%, for example at most 3.5 mol%, at most 3.0 mol%, at most 2.5 mol%, at most 2.0 mol%, at most 1.5 mol%, at most 1.0 mol%, or at most 0.5 mol%.

Preferably, the amount of Na₂O is in a range of from 0 to 3.5 mol%, more preferably from 0.1 to 3.0 mol%, more preferably from 0.2 to 2.75 mol%, for example from 0.5 to 2.75 mol%, from 1.0 to 2.75 mol%, from 1.5 to 2.75 mol%, or from 0.2 to 1.5 mol%, from 0.2 to 1.0 mol% or from 0.2 to 0.5 mol%. Preferably, the amount of Na₂O is at least 0.1 mol%, more preferably at least 0.2 mol%, for example at least 0.5 mol%, at least 1.0 mol%, or at least 1.5 mol%. Preferably, the amount of Na₂O is at most 3.5 mol%, more preferably at most 3.0 mol%, more preferably at most 2.75 mol%, for example at most 1.5 mol%, at most 1.0 mol%, or at most 0.5 mol%. In some embodiments, the glasses of the invention may be free of Na₂O.

Preferably, the amount of K₂O is in a range of from 0 to 4.0 mol%, more preferably from 0 to 3.5 mol%, more preferably from 0 to 3.0 mol%, for example from 0.1 to 3.0 mol%, from 0.2 to 3.0 mol%, from 0.5 to 3.0 mol%, from 1.0 to 3.0 mol%, from 1.5 to 3.0 mol%, or from 0 to 1.5 mol%, from 0 to 1.0 mol%, from 0 to 0.5 mol%, from 0 to 0.2 mol%, or from 0 to 0.1 mol%. The amount of K₂O may for example be at least 0.1 mol%, at least 0.2 mol%, at least 0.5 mol%, at least 1.0 mol% or at least 1.5 mol%. Preferably, the amount of K₂O is at most 4.0 mol%, more preferably at most 3.5 mol%, more preferably at most 3.0 mol%, for example at most 1.5 mol%, at most 1.0 mol%, at most 0.5 mol%, at most 0.2 mol%, or at most 0.1 mol%. In some embodiments, the glasses of the invention are free of K₂O.

In order to further improve the devitrification resistance, the ratios of Na₂O and K₂O can be optimized. In some embodiments, Na₂O is the only alkali metal oxides and the glasses are free of K₂O. In such embodiments, the ratio of the molar amount of Na₂O to the molar amount of R₂O is 1:1. In other embodiments, both Na₂O and K₂O are present in the glass. In such embodiments, it is preferred that Na₂O and K₂O are present in comparable amounts so that the ratio of the molar amount of Na₂O to the molar amount of R₂O is comparably close to 0.5:1. Preferably, the ratio of the molar amount of Na₂O to the molar amount of R₂O is in a range of from 0.1:1 to 1:1, for example from 0.2:1 to 0.8:1, from 0.3:1 to 0.7:1, or from 0.4:1 to 0.6:1. Preferably, the ratio of the molar amount of Na₂O to the molar amount of R₂O is at least 0.1:1, for example at least 0.2:1, at least 0.3:1, or at least 0.4:1. The ratio of the molar amount of Na₂O to the molar amount of R₂O is at most 1:1, for example at most 0.9:1, at most 0.8:1, at most 0.7:1, or at most 0.6:1.

Alkaline earth metal oxides are advantageous for achieving particularly high devitrification resistance. Alkaline earth metal oxides can also serve to adjust the viscosity of the glass (optimization of the melting behavior). Alkaline earth metal oxides can lower the melting point of the glass so that it can be melted with less energy.

Alkaline earth metal oxides commonly used in glasses are MgO, CaO, SrO and BaO. The term "RO" as used herein refers to the sum of the molar amounts of MgO, CaO, SrO, BaO and ZnO. If the amount of RO is very low, devitrification resistance may be impaired. If the amount of RO is very high, the hydrolytic resistance may be impaired.

Preferably, the amount of RO is in a range of from >15.0 to 22.5 mol%, more preferably from 15.25 to 22.0 mol%, more preferably from 15.5 to 21.5 mol%, more preferably from 15.75 to 20.75 mol%, more preferably from more preferably from 16.0 to 20.0 mol%, for example from 16.0 to 19.5 mol%, from 16.0 to 19.0 mol%, from 16.0 to 18.5 mol%, from 16.0 to 18.0 mol%, from 16.0 to 17.5 mol%, or from 16.0 to 17.0 mol%. The amount of RO is preferably higher than 15.0 mol%, more preferably at least 15.25 mol%, more preferably at least 15.5 mol%, more preferably at least 15.75 mol%, more preferably at least 16.0 mol%. The amount of RO is preferably at most 22.5 mol%, more preferably at most 22.0 mol%, more preferably at most 21.5 mol%, more preferably at most 20.75 mol%, more preferably at most 20.0 mol%, for example at most 19.5 mol%, at most 19.0 mol%, at most 18.5 mol%, at most 18.0 mol%, at most 17.5 mol%, or at most 17.0 mol%.

CaO is an alkaline earth oxide and serves to adjust the viscosity of the glass (optimization of the melting behavior). CaO lowers the melting point of the glass so that it can be melted with less energy. However, very high amounts of CaO may impair the hydrolytic resistance. Preferably, the amount of CaO is in a range of from 3.0 to 15.0 mol%, more preferably from 3.5 mol% to 14.5 mol%, more preferably from 4.0 to 14.0 mol%, more preferably from 4.5 mol% to 13.75 mol%, more preferably from 5.0 to 13.5 mol%, for example from 5.0 mol% to 12.5 mol%, from 5.0 mol% to 10.0 mol%, from 5.0 mol% to 8.0 mol%, from 5.0 mol% to 6.0 mol%, or from 6.0 mol% to 13.5 mol%, from 8.0 mol% to 13.5 mol%, from 10.0 mol% to 13.5 mol%, or from 12.5 mol% to 13.5 mol%. The amount of CaO is preferably at least 3.0 mol%, more preferably at least 3.5 mol%, more preferably at least 4.0 mol%, more preferably at least 4.5 mol%, more preferably at least 5.0 mol%, for example at least 6.0 mol%, at least 8.0 mol%, at least 10.0 mol%, or at least 12.5 mol%. The amount of CaO is preferably at most 15.0 mol%, more preferably at most 14.5 mol%, more preferably at most 14.0 mol%, more preferably at most 13.75 mol%, more preferably at most 13.5 mol%, for example at most 12.5 mol%, at most 10.0 mol%, at most 8.0 mol%, or at most 6.0 mol%.

MgO may in particular be advantageous for adjusting the viscosity of the glass. MgO lowers the melting point of the glass and helps the glass to melt better. MgO may improve the hydrolytic resistance if used in moderate amounts. However, if the amount of MgO is high, devitrification resistance may be impaired. Preferably, the amount of MgO is in a range of from 0.1 to 7.0 mol%, more preferably from 0.2 to 7.0 mol%, more preferably from 0.4 to 7.0 mol%, more preferably from 0.6 to 6.0 mol%, more preferably from 0.8 to 5.0 mol%, more preferably from 1.0 to 4.5 mol%, more preferably from 1.0 to 4.0 mol%, more preferably from 1.5 to 3.75 mol%, more preferably from 2.0 to 3.5 mol%. The amount of MgO is preferably at least 0.1 mol%, more preferably at least 0.2 mol%, more preferably at least 0.4 mol%, more preferably at least 0.6 mol%, more preferably at least 0.8 mol%, more preferably at least 1.0 mol%, more preferably at least 1.5 mol%, more preferably at least 2.0 mol%. The amount of MgO is preferably at most 7.0 mol%, more preferably at most 6.0 mol%, more preferably at most 5.0 mol%, more preferably at most 4.5 mol%, more preferably at most 4.0 mol%, more preferably at most 3.75 mol%, more preferably at most 3.5 mol%.

For further improvement of devitrification resistance, the ratio of the molar amount of CaO to the molar amount of MgO may be optimized. Preferably, the ratio of the molar amount of CaO to the molar amount of MgO is in a range of from 0.5:1 to 50:1, more preferably from 0.8:1 to 30:1, more preferably from 1:1 to 25:1, more preferably from 1.1:1 to 20:1, more preferably from 1.2:1 to 15:1, more preferably from 1.3:1 to 10:1, more preferably from 1.5:1 to 7.5:1. Preferably, the ratio of the molar amount of CaO to the molar amount of MgO is at least 0.5:1, more preferably at least 0.8:1, more preferably at least 1:1, more preferably at least 1.1:1, more preferably at least 1.2:1, more preferably at least 1.3:1, more preferably at least 1.5:1. Preferably, the ratio of the molar amount of CaO to the molar amount of MgO is at most 50:1, more preferably at most 30:1, more preferably at most 25:1, more preferably at most 20:1, more preferably at most 15:1, more preferably at most 10:1, more preferably at most 7.5:1.

Preferably, the ratio of the molar amount of MgO to the molar amount of RO is in a range of from 0.01:1 to 0.45:1, more preferably in a range of from 0.02:1 to 0.35:1, more preferably from 0.05:1 to 0.25:1, more preferably from 0.1:1 to 0.2:1. Preferably, the ratio of the molar amount of MgO to the molar amount of RO is at least 0.01:1, more preferably at least 0.02:1, more preferably at least 0.05:1, more preferably at least 0.1:1. Preferably, the ratio of the molar amount of MgO to the molar amount of RO is at most 0.45:1, more preferably at most 0.35:1, more preferably at most 0.25:1, more preferably at most 0.2:1.

Preferably, the ratio of the molar amount of CaO to the molar amount of RO is in a range of from 0.15:1 to 0.95:1, more preferably from 0.2:1 to 0.9:1, more preferably from 0.25:1 to 0.8:1, more preferably from 0.3:1 to 0.75:1, for example from 0.3:1 to 0.7:1, from 0.3:1 to 0.6:1, from 0.3:1 to 0.5:1, from 0.3:1 to 0.4:1, or from 0.4:1 to 0.75:1, from 0.5:1 to 0.75:1, from 0.6:1 to 0.75:1 or from 0.7:1 to 0.75:1. Preferably, the ratio of the molar amount of CaO to the molar amount of RO is at least 0.15:1, more preferably at least 0.2:1, more preferably at least 0.25:1, more preferably at least 0.3:1, for example at least 0.4:1, at least 0.5:1, at least 0.6:1, or at least 0.7:1. Preferably, the ratio of the molar amount of CaO to the molar amount of RO is at most 0.95:1, more preferably at most 0.9:1, more preferably at most 0.8:1, more preferably at most 0.75:1, for example at most 0.7:1, at most 0.6:1, at most 0.5:1, or at most 0.4:1.

Preferably, the ratio of the sum of the molar amounts of MgO and CaO to the molar amount of RO is in a range of from 0.25:1 to 0.95:1, more preferably, from 0.3:1 to 0.9:1, more preferably from 0.4:1 to 0.85:1, for example from 0.4:1 to 0.8:1, from 0.4:1 to 0.7:1, from 0.4:1 to 0.6:1, from 0.4:1 to 0.5:1, or from 0.5:1 to 0.85:1, from 0.6:1 to 0.85:1, from 0.7:1 to 0.85:1 or from 0.8:1 to 0.85:1. Preferably, the ratio of the sum of the molar amounts of MgO and CaO to the molar amount of RO is at least 0.25:1, more preferably at least 0.3:1, more preferably at least 0.4:1, for example at least 0.5:1, at least 0.6:1, at least 0.7:1, or at least 0.8:1. Preferably, the ratio of the sum of the molar amounts of MgO and CaO to the molar amount of RO is at most 0.95:1, more preferably at most 0.9:1, more preferably at most 0.85:1, for example at most 0.8:1, at most 0.7:1, at most 0.6:1, or at most 0.5:1.

The amount of SrO is preferably in a range of from 0 to 10.0 mol%, more preferably from 0 to 9.5 mol%, more preferably from 0 to 9.0 mol%, more preferably from 0 to 8.5 mol%, for example from 0.1 to 8.5 mol%, from 0.2 to 8.5 mol%, from 0.5 to 8.5 mol%, from 1.0 to 8.5 mol%, from 2.0 to 8.5 mol%, from 3.0 to 8.5 mol%, from 4.0 to 8.5 mol%, from 5.0 to 8.5 mol%, from 6.0 to 8.5 mol%, from 7.0 to 8.5 mol%, or from 0 to 7.0 mol%, from 0 to 6.0 mol%, from 0 to 5.0 mol%, from 0 to 4.0 mol%, from 0 to 3.0 mol%, from 0 to 2.0 mol%, from 0 to 1.0 mol%, from 0 to 0.5 mol%, from 0 to 0.2 mol% or from 0 to 0.1 mol%. Preferably, the amount of SrO is at least 0.1 mol%, for example at least 0.2 mol%, at least 0.5 mol%, at least 1.0 mol%, at least 2.0 mol%, at least 3.0 mol%, at least 4.0 mol%, at least 5.0 mol%, at least 6.0 mol%, or at least 7.0 mol%. Preferably, the amount of SrO is at most 10.0 mol%, more preferably at most 9.5 mol%, more preferably at most 9.0 mol%, more preferably at most 8.5 mol%, for example at most 7.0 mol%, at most 6.0 mol%, at most 5.0 mol%, at most 4.0 mol%, at most 3.0 mol%, at most 2.0 mol%, at most 1.0 mol%, at most 0.5 mol%, at most 0.2 mol%, or at most 0.1 mol%. In some embodiments, the glasses may be free of SrO.

The amount of BaO is preferably in a range of from 0 to 5.0 mol%, more preferably from 0 to 4.5 mol%, for example from 0.1 to 4.5. mol%, from 0.2 to 4.5 mol%, from 0.5 to 4.5 mol%, from 1.0 to 4.5 mol%, from 2.0 to 4.5 mol%, from 3.0 to 4.5 mol%, from 3.5 to 4.5 mol%, or from 0 to 3.5 mol%, from 0 to 3.0 mol%, from 0 to 2.0 mol%, from 0 to 1.0 mol%, from 0 to 0.5 mol%, from 0 to 0.2 mol% or from 0 to 0.1 mol%. The amount of BaO may for example be at least 0.1 mol%, at least 0.2 mol%, at least 0.5 mol%, at least 1.0 mol%, at least 2.0 mol%, at least 3.0 mol% or least 3.5 mol%. Preferably, the amount of BaO is at most 5.0 mol%, more preferably at most 4.5 mol%, for example at most 3.5 mol%, at most 3.0 mol%, at most 2.0 mol%, at most 1.0 mol%, at most 0.5 mol%, at most 0.2 mol%, or at most 0.1 mol%. In some embodiments, the glasses may be free of BaO.

Preferably, the sum of the molar amounts of R₂O and BaO is in a range of from 0.1 to 9.0 mol%, more preferably from 0.1 to 8.5 mol%, more preferably from 0.2 to 8.0 mol%, more preferably from 0.5 to 7.5 mol%, more preferably from 0.75 to 7.0 mol%, more preferably from 0.75 to 6.5 mol%, more preferably from 1.0 to 6.0 mol%, more preferably from 1.25 to 5.5 mol%, more preferably from 1.5 to 5.0 mol%, for example from 2.0 to 5.0 mol%, from 2.5 to 5.0 mol%, from 3.0 to 5.0 mol%, from 3.5 to 5.0 mol%, from 4.0 to 5.0 mol% or from 1.5 to 4.0 mol%, from 1.5 to 3.5 mol%, from 1.5 to 3.0 mol%, from 1.5 to 2.5 mol%, or from 1.5 to 2.0 mol%. The sum of the molar amounts of R₂O and BaO is preferably at least 0.1 mol%, more preferably at least 0.2 mol%, more preferably at least 0.5 mol%, more preferably at least 0.75 mol%, more preferably at least 1.0 mol%, more preferably at least 1.25 mol%, more preferably at least 1.5 mol%, for example at least 2.0 mol%, at least 2.5, at least 3.0 mol%, at least 3.5 mol%, or at least 4.0 mol%. The sum of the molar amounts of R₂O and BaO is preferably at most 9.0 mol%, more preferably at most 8.5 mol%, more preferably at most 8.0 mol%, more preferably at most 7.5 mol%, more preferably at most 7.0 mol%, more preferably at most 6.5 mol%, more preferably at most 6.0 mol%, more preferably at most 5.5 mol%, more preferably at most 5.0 mol%, for example at most 4.0 mol%, at most 3.5 mol%, at most 3.0 mol%, at most 2.5 mol%, or at most 2.0 mol%.

The glasses of the invention comprise only very limited amounts of ZnO. The molar amount of ZnO is preferably at most 0.5 mol%, more preferably at most 0.2 mol%, more preferably at most 0.15 mol%, more preferably at most 0.1 mol%, more preferably at most 0.05 mol%. Even more preferably, the glasses of the invention are free of ZnO.

TiO₂ may contribute to improving the chemical resistance. However, particularly preferably, the glasses of the invention are free of TiO₂. TiO₂ may react with Fe₂0₃ and result in a yellow-brownish coloring of the glass. Therefore, it is preferable to limit the amount of TiO₂ in the glass. The glasses of the invention comprise only very limited amounts of TiO₂. The amount of TiO₂ is preferably at most 0.5 mol%, more preferably at most 0.2 mol%, more preferably at most 0.15 mol%, more preferably at most 0.1 mol%, more preferably at most 0.05 mol%. Even more preferably, the glasses of the invention are free of TiO₂.

ZrO₂ may increase the hydrolytic resistance. In particular, ZrO₂ may stabilize the glass structure, for example by forming structural units of [ZrO3]²⁻ and Ca²⁺ which reduces the mobility of Ca²⁺ ions. However, high amounts of ZrO₂ may increase the processing temperature and may decrease the devitrification resistance. Preferably, the amount of ZrO₂ is in a range of from 0 to 6.0 mol%, more preferably from 0 to 5.0 mol%, more preferably from 0 to 4.0 mol%, more preferably from 0 to 3.0 mol%, more preferably from 0 to 2.0 mol%, for example from 0 to 1.5 mol%, from 0 to 1.25 mol% from 0 to 1.0 mol%, from 0 to 0.5 mol%, from 0 to 0.2 mol%, from 0 to 0.1 mol%, or from 0.1 to 2.0 mol%, from 0.2 to 2.0 mol%, from 0.5 to 2.0 mol%, from 1.0 to 2.0 mol%, from 1.25 to 2.0 mol%, or from 1.5 to 2.0 mol%. The amount of ZrO₂ may for example be at least 0.1 mol%, at least 0.2 mol%, at least 0.5 mol%, at least 1.0 mol%, at least 1.25 mol%, or at least 1.5 mol%. The amount of ZrO₂ is preferably at most 6.0 mol%, more preferably at most 5.0 mol%, more preferably at most 4.0 mol%, more preferably at most 3.0 mol%, more preferably at most 2.0 mol%, for example at most 1.5 mol%, at most 1.25 mol%, at most 1.0 mol%, at most 0.5 mol%, at most 0.2 mol%, or at most 0.1 mol%. In some embodiments, the glasses are free of ZrO₂.

Cl may act as a refining agent. Preferably, the amount of Cl is in a range of from 0 to 2.0 mol-%, more preferably from 0.1 to 1.5 mol%, more preferably from 0.2 to 1.0 mol%, more preferably from 0.25 to 0.8 mol%, more preferably from 0.3 to 0.7 mol%, more preferably from 0.4 to 0.6 mol%. The amount of Cl is for example at least 0.1 mol%, at least 0.2 mol%, at least 0.25 mol%, at least 0.3 mol%, or at least 0.4 mol%. The amount of Cl is preferably at most 2.0 mol%, more preferably at most 1.5 mol%, more preferably at most 1.0 mol%, more preferably at most 0.8 mol%, more preferably at most 0.7 mol%, more preferably at most 0.6 mol%.

The glasses of the invention comprise only very limited amounts of F. The molar amount of F is preferably at most 0.5 mol%, more preferably at most 0.2 mol%, more preferably at most 0.15 mol%, more preferably at most 0.1 mol%, more preferably at most 0.05 mol%. Even more preferably, the glasses of the invention are free of F.

Preferably, the ratio of the molar amount of RO and the molar amount of Al₂O₃ is in a range of from 1.4:1 to 5:1, more preferably from 1.45:1 to 4:1, more preferably from 1.5:1 to 3:1, more preferably from 1.55:1 to 2.5:1, more preferably from 1.6:1 to 2.25:1. The ratio of the molar amount of RO and the molar amount of Al₂O₃ is preferably at least 1.4:1, more preferably at least 1.45:1, more preferably at least 1.5:1, more preferably at least 1.55:1, more preferably at least 1.6:1. Preferably, the ratio of the molar amount of RO and the molar amount of Al₂O₃ is at most 5:1, more preferably at most 4:1, more preferably at most 3:1, more preferably at most 2.5:1, more preferably at most 2.25:1.

Preferably, the ratio of the molar amount of SiO₂ to the molar amount of RO is in a range of from 3:1 to 4.5:1, more preferably from 3.4:1 to 4.4:1. Preferably, the ratio of the molar amount of SiO₂ to the molar amount of RO is at least 3:1, more preferably at least 3.4:1. Preferably, the ratio of the molar amount of SiO₂ to the molar amount of RO is at most 4.5:1, more preferably at most 4.4:1.

Preferably, the ratio of the molar amount Al₂O₃ and the molar amount of CaO is in a range of from 0.3:1 to 3:1, more preferably from 0.5:1 to 2.5:1, more preferably from 0.7:1 to 2:1. Preferably, the ratio of the molar amount Al₂O₃ and the molar amount of CaO is at least 0.3:1, more preferably at least 0.5:1, more preferably at least 0.7:1. Preferably, the ratio of the molar amount Al₂O₃ and the molar amount of CaO is at most 3:1, more preferably at most 2.5:1, more preferably at most 2:1.

Preferably, the ratio of the molar amount of R₂O and the molar amount of Al₂O₃ is in a range of from 0.02:1 to 1:1, more preferably from 0.02:1 to 0.8:1, more preferably from 0.02:1 to 0.6:1, for example from 0.02:1 to 0.5:1, from 0.02:1 to 0.4:1, from 0.02:1 to 0.3:1, from 0.02:1 to 0.2:1, from 0.02:1 to 0.1:1, or from 0.1:1 to 0.6:1, from 0.2:1 to 0.6:1, from 0.3:1 to 0.6:1, from 0.4:1 to 0.6:1 or from 0.5:1 to 0.6:1. Preferably, the ratio of the molar amount of R₂O and the molar amount of Al₂O₃ is at least 0.02:1, for example at least 0.1:1, at least 0.2:1, at least 0.3:1, at least 0.4:1, or at least 0.5:1. Preferably, the ratio of the molar amount of R₂O and the molar amount of Al₂O₃ is at most 1:1, more preferably at most 0.8:1, more preferably at most 0.6:1, for example at most 0.5:1, at most 0.4:1, at most 0.3:1, at most 0.2:1 or at most 0.1:1.

Preferably, the ratio of the molar amount of RO and the molar amount of R₂O is in a range of from 2.25:1 to 100:1, more preferably from 2.5:1 to 85:1, more preferably from 2.75:1 to 75:1, more preferably from 3:1 to 65:1, for example from 3:1 to 50:1, from 3:1 to 25:1, from 3:1 to 15:1, from 3:1 to 10:1, from 3:1 to 7.5:, from 3.25:1 to 5:1, or from 5:1 to 65:1, from 7.5:1 to 65:1, from 10:1 to 65:1, from 15:1 to 65:1, from 25:1 to 65:1 or from 50:1 to 65:1. Preferably, the ratio of the molar amount of RO and the molar amount of R₂O is at least 2.25:1, more preferably at least 2.5:1, more preferably at least 2.75:1, more preferably at least 3:1, more preferably at least 3.25:1, for example at least 5:1, at least 7.5:1, at least 10:1, at least 15:1, at least 25:1, or at least 50:1. Preferably, the ratio of the molar amount of RO and the molar amount of R₂O is at most 100:1, more preferably at most 85:1, more preferably at most 75:1, more preferably at most 65:1, for example at most 50:1, at most 25:1, at most 15:1, at most 10:1, at most 7.5:1 or at most 5:1.

Preferably, the ratio of the molar amount of Al₂O₃ to the molar amount of Na₂O is in a range of from 1.5:1 to 100:1, more preferably from 2:1 to 75:1, more preferably from 2.5:1 to 50:1, more preferably from 3:1 to 35:1, for example from 3:1 to 30:1, from 3:1 to 25:1, from 3:1 to 20:1, from 3:1 to 15:1, from 3:1 to 10:1, from 3:1 to 7.5:1, from 3:1 to 5:1, or from 5:1 to 35:1, from 7.5:1 to 35:1, from 10:1 to 35:1, from 15:1 to 35:1, from 20:1 to 35:1, from 25:1 to 35:1 or from 30:1 to 35:1. Preferably, the ratio of the molar amount of Al₂O₃ to the molar amount of Na₂O is at least 1.5:1, more preferably at least 2:1, more preferably at least 2.5:1, more preferably at least 3:1, for example at least 5:1, at least 7.5:1, at least 10:1, at least 15:1, at least 20:1, at least 25:1, or at least 30:1. Preferably, the ratio of the molar amount of Al₂O₃ to the molar amount of Na₂O is at most 100:1, more preferably at most 75:1, more preferably at most 50:1, more preferably at most 35:1, for example at most 30:1, at most 25:1, at most 20:1, at most 15:1, at most 10:1, at most 7.5:1, or at most 5:1.

The glasses of the present invention are aluminosilicate glasses. However, the glass comprises other components as well. Preferably, the sum of the molar amounts of SiO₂ and Al₂O₃ is in a range of from 69.0 to 83.0 mol%, more preferably from 70.0 mol-% to 82.0 mol%, more preferably from 72.0 to 81.5 mol%, more preferably from 74.0 to 81.0 mol%, more preferably from 76.0 to 80.5 mol%. Preferably, the sum of the molar amounts of SiO₂ and Al₂O₃ is at least 69.0 mol%, more preferably at least 70.0 mol%, more preferably at least 72.0 mol%, more preferably at least 74.0 mol%, more preferably at least 76.0 mol%. Preferably, the sum of the molar amounts of SiO₂ and Al₂O₃ is at most 83.0 mol%, more preferably at most 82.0 mol%, more preferably at most 81.5 mol%, more preferably at most 81.0 mol%, more preferably at most 80.5 mol%.

Preferably, the sum of the molar amounts of R₂O and RO is in a range of from 15.5 to 25.0 mol%, more preferably from 16.0 to 24.5 mol%, more preferably from 16.5 to 24.0 mol%, more preferably from 17.0 to 23.5 mol%, more preferably from 17.5 to 23.0 mol%, more preferably from 18.0 to 22.5 mol%, more preferably from 18.5 to 22.0 mol%, more preferably from 19.0 to 21.5 mol%. Preferably, the sum of the molar amounts of R₂O and RO is at least 15.5 mol%, more preferably at least 16.0 mol%, more preferably at least 16.5 mol%, more preferably at least 17.0 mol%, more preferably at least 17.5 mol%, more preferably at least 18.0 mol%, more preferably at least 18.5 mol%, more preferably at least 19.0 mol%. Preferably, the sum of the molar amounts of R₂O and RO is at most 25.0 mol%, more preferably at most 24.5 mol%, more preferably at most 24.0 mol%, more preferably at most 23.5 mol%, more preferably at most 23.0 mol%, more preferably at most 22.5 mol%, more preferably at most 22.0 mol%, more preferably at most 21.5 mol%.

Generally, a color impression of neutral white is desired, in particular in the field of pharmaceutical packaging. Another color impression, in particular a yellow-brownish color impression is generally regarded as undesired as such a glass appears to be "bad" or even "dirty" to the observer. Furthermore, an undesired color impression of the glass may compromise proper inspection of the content pharmaceutical packages. Therefore, in the prior art, glasses with extremely low content of Fe₂0₃ were produced in order to avoid formation of Fe-Ti oxides that lead to a yellow-brownish color impression. Thus, raw materials with very high purity were required in order to keep the content of Fe₂0₃ as low as possible. Such raw materials are very expensive.

The present inventors found a way to provide glasses with a good color impression without the need for utilizing very expensive raw materials of high purity. In particular, the glasses of the invention may comprise Fe₂0₃ in an amount of at least 12 ppm (based on mol%), for example at least 20 ppm, at least 30 ppm, at least 40 ppm, more than 50 ppm, at least 60 ppm, at least 70 ppm, at least 80 ppm or at least 90 ppm. However, the amount of Fe₂O₃ should not be very high. Preferably, the glass has an Fe₂0₃ content of at most 0.1 mol% (1000 ppm), more preferably at most 750 ppm, more preferably at most 500 ppm, more preferably at most 250 ppm, more preferably at most 200 ppm, more preferably at most 175 ppm, more preferably at most 150 ppm, more preferably at most 125 ppm. Preferably, the amount of Fe₂O₃ is in a range of from 12 to 1000 ppm, more preferably from 20 to 750 ppm, more preferably from 30 to 500 ppm, more preferably from 40 to 250 ppm, more preferably from 50 to 200 ppm, more preferably from 60 to 175 ppm, more preferably from 70 to 150 ppm, more preferably from 80 to 125 ppm, for example from 90 to 125 ppm.

The color impression of a glass can be described by the position according to the CIE 1931 color space. Preferably, the glass of the present invention is such that the sum of the z-value and x-value is higher than the y-value by a factor of at least 1.5 according to the CIE 1931 color space when measured at a sample thickness of 1 mm. Such a glass gives a particular good color impression that is far from the undesired yellow-brownish impression.

Preferably, the glass comprises the following components in the indicated amounts (in mol%):

| **Component** | **Min** | **Max** |
|---|---|---|
| SiO₂ | 66.5 | 71.0 |
| Al₂O₃ | 7.0 | 10.5 |
| B₂O₃ | 0 | 0.1 |
| Na₂O | 0.1 | 3.0 |
| K₂O | 0 | 3.0 |
| MgO | 1.0 | 4.0 |
| CaO | 4.0 | 14.0 |
| SrO | 0 | 9.0 |
| BaO | 0 | 4.5 |
| ZnO | 0 | 0.1 |
| R₂O | 0.1 | 5.5 |
| RO | 15.5 | 21.5 |

When in this disclosure it is mentioned that the glasses are free of a component or that they do not contain a certain component, then this means that this component is only allowed to be present as an impurity in the glasses. This means that it is not added in substantial amounts. Not substantial amounts are amounts of less than 500 ppm (molar), preferably less than 400 ppm (molar), more preferably less than 300 ppm (molar), more preferably less than 200 ppm (molar), more preferably less than 100 ppm (molar), particularly preferably less than 50 ppm (molar) and most preferably less than 10 ppm (molar). Preferably, the glasses of the invention are free of F, MoOs, SnO₂ and/or CeO₂.

The glasses of the present invention have an excellent transmission. Preferably, the glass has a transmission of higher than 85 %, more preferably higher than 90 % at a wavelength of 400 nm at a sample thickness of 1 mm. Preferably, the glass has a transmission of higher than 85 %, more preferably higher than 90 % at a wavelength of 495 nm at a sample thickness of 1 mm. Preferably, the glass has a transmission of higher than 85 %, more preferably higher than 90 % at a wavelength of 670 nm at a sample thickness of 1 mm. Preferably, the glass has a transmission of higher than 75 %, more preferably higher than 85 % at a wavelength of 400 nm at a sample thickness of 10 mm. Preferably, the glass has a transmission of higher than 75 %, more preferably higher than 85 % at a wavelength of 495 nm at a sample thickness of 10 mm. Preferably, the glass has a transmission of higher than 75 %, more preferably higher than 85 % at a wavelength of 670 nm at a sample thickness of 10 mm. Preferably, the glass has a transmission at a sample thickness of 1 mm of at most 5 % higher at 495 nm compared to at 400 nm. Preferably, the glass has a transmission at a sample thickness of 10 mm of at most 5 % higher at 495 nm compared to at 400 nm. Preferably, the glass has a transmission at 400 nm of at most 5 % lower at a sample thickness of 10 mm compared to at a sample thickness of 1 mm.

Preferably, the glass has a transmission of higher than 85 %, more preferably higher than 90 % at a wavelength of 400 nm and 495 nm and 670 nm at a sample thickness of 1 mm. Preferably, the glass has a transmission of higher than 75 %, more preferably higher than 85 % at a wavelength of 400 nm and 495 nm and 670 nm at a sample thickness of 10 mm.

Preferably, the glass has a transmission of higher than 85 %, more preferably higher than 90 % at a wavelength of 400 nm, 450 nm, 495 nm, 550 nm, 600 nm, 650 nm and 670 nm at a sample thickness of 1 mm. Preferably, the glass has a transmission of higher than 75 %, more preferably higher than 85 % at a wavelength of 400 nm, 450 nm, 495 nm, 550 nm, 600 nm, 650 nm and 670 nm at a sample thickness of 10 mm.

Preferably, the glasses of the present invention have a high transmission in the visual range. Preferably, the glass has a transmission of higher than 50 %, more preferably higher than 60 %, more preferably higher than 70 %, more preferably higher than 80 %, more preferably higher than 85 %, more preferably higher than 90 % at any wavelength in the entire wavelength region of from 380 nm to 780 nm at a sample thickness of 1 mm. Preferably, the glass has a transmission of higher than 50 %, more preferably higher than 60 %, more preferably higher than 70 %, more preferably higher than 75 %, more preferably higher than 80 %, more preferably higher than 85 % at any wavelength in the entire wavelength region of from 380 nm to 780 nm at a sample thickness of 10 mm.

Preferably, the glasses of the present invention have a high transmission in the visual range, in particular at a wavelength of 400 nm and of 495 nm and of 670 nm. Preferably, the transmission at 400 nm and at 495 nm and at 670 nm is very similar.

Preferably, the ratio of the transmission at 495 nm and the transmission at 400 nm is in a range of from 0.95:1 to 1.05:1, more preferably from 0.97:1 to 1.04:1, more preferably from 0.99:1 to 1.03:1, more preferably from 1:1 to 1.02:1 at a sample thickness of 1 mm and/or at a sample thickness of 10 mm. It is particular preferred that the transmission at 495 nm is higher as compared to the transmission at 400 nm. Most preferred, the ratio of the transmission at 495 nm and the transmission at 400 nm is in a range of from >1:1 to 1.015:1.

Preferably, the ratio of the transmission at 670 nm and the transmission at 495 nm is in a range of from 0.95:1 to 1.05:1, more preferably from 0.96:1 to 1.03:1, more preferably from 0.97:1 to 1.02:1, more preferably from 0.98:1 to 1.01:1 at a sample thickness of 1 mm and/or at a sample thickness of 10 mm.

Preferably, the ratio of the transmission at 670 nm and the transmission at 400 nm is in a range of from 0.95:1 to 1.05:1, more preferably from 0.96:1 to 1.04:1, more preferably from 0.97:1 to 1.03:1, more preferably from 0.98:1 to 1.02:1, more preferably from 0.99:1 to 1.01:1 at a sample thickness of 1 mm and/or at a sample thickness of 10 mm.

As described above, the color impression can be described based on the CIE 1931 color space that represents a color impression by a combination of three values, namely the x-value, the y-value and the z-value (chromaticity coordinates). It is preferably determined analogous to DIN 5033 using illuminant "C" at 6770 K for the CIE standard observer within a 2° arc of the fovea *(CIE 1931 2° Standard Observer).* Briefly, X, Y and Z standard spectral values are taken from the table of the CIE 1931 color space system and multiplied with the measured transmission values in order to obtain the respective tristimulus values.

The chromaticity coordinates x, y and z that are defining the color location or color position within the color space are obtained by normalizing the sum x + y + z to be equal to 1. Thus, x-value, y-value and z-value are positive values and the sum x + y + z = 1. The CIE 1931 color space chromaticity diagram represents the color space, wherein the x-axis refers to the x-values and the y-axis refers to the y-values. The z-value can be inferred from any given pair of x-value and y-value by calculating z = 1 - x - y. The point x = y = z = 1/3 represents the so called "white point" that defines the color "white". High x-values represent reddish colors. High y-values represent greenish colors. High z-values represent bluish colors. Each chromaticity is represented as a particular color location in color space. Additive mixed colors have their color location on the straight connecting line of the components. For exactly characterizing the color stimulus specification, the tristimulus value Y is used as a brightness reference value (DIN 5033, Part 1) by dividing the sum of all y-values by a ratio (=21.293658). Thereby the resulting value is normalized to a maximum of 100. This value indicates whether the glass is brighter or darker for the human eye as compared to a comparative probe.

The x-value, y-value and z-value are positive values and the sum x + y + z = 1. The CIE 1931 color space chromaticity diagram represents the color space, wherein the x-axis refers to the x-values and the y-axis refers to the y-values. The z-value can be inferred from any given pair of x-value and y-value by calculating z = 1 - x - y. The point x = y = z = 1/3 represents the so called "white point" that defines the color "white". High x-values represent reddish colors. High y-values represent greenish colors. High z-values represent bluish colors.

Preferably, the x-value in the CIE 1931 color space is at least 0.30 and at most 0.35, more preferably at least 0.31 and at most 0.32 at a sample thickness of 1 mm and/or 10 mm. Preferably, the y-value in the CIE 1931 color space is at least 0.30 and at most 0.35, more preferably at least 0.31 and at most 0.32 at a sample thickness of 1 mm and/or 10 mm. Preferably, x-value and y-value are at least 0.30 and at most 0.35, more preferably at least 0.31 and at most 0.32 at a sample thickness of 1 mm and/or 10 mm.

As described above, a color impression of neutral white is desired, in particular in the field of pharmaceutical packaging. In contrast, a yellow-brownish color impression is undesired. A neutral white color impression is represented by x = y = z = 1/3, which is therefore one potential embodiment of the invention at a sample thickness of 1 mm and/or 10 mm. However, a color impression slightly differing from neutral white is in fact even more preferred. Therefore, it is preferred that the z-value is higher than 1/3, preferably higher than 0.34, more preferably higher than 0.35, more preferably higher than 0.36, more preferably at least 0.37 or even higher than 0.37 at a sample thickness of 1 mm and/or 10 mm. However, the z-value should not be too high in order for the glass not to appear very blue. Particularly preferably, the z-value is in a range of from 0.37 to 0.38, more preferably from > 0.37 to 0.375, more preferably from 0.371 to 0.374 at a sample thickness of 1 mm and/or 10 mm.

Generally, the z-value may be smaller at a sample thickness of 10 mm as compared to a sample thickness of 1 mm. For example, the difference of the z-value at a sample thickness of 1 mm and the z-value at a sample thickness of 10 mm may be in a range of from 0.0001 to 0.005, more preferably from 0.0005 to 0.002. Hence, at a sample thickness of 10 mm the z-value is preferably in a range of from >0.37 to 0.375, more preferably from 0.371 to 0.373.

Preferably, the ratio of z-value and x-value is in a range of from 1.1 to 1.3, more preferably from 1.15 to 1.25 at a sample thickness of 1 mm and/or 10 mm. Preferably, the ratio of z-value and y-value is in a range of from 1.05 to 1.3, more preferably from 1.1 to 1.25 at a sample thickness of 1 mm and/or 10 mm.

It turned out that the color impression of the glass is particularly advantageous if the y-value is higher than the x-value. However, the difference between y-value and x-value should not be too high. Preferably, the y-value in the CIE 1931 color space is higher than the x-value by a factor of at most 1.1 at a sample thickness of 1 mm and/or 10 mm. Preferably, the ratio of y-value and x-value is in a range of from >1:1 to 1.05:1, more preferably from 1.01:1 to 1.03:1, more preferably from 1.015:1 to 1.025:1 at a sample thickness of 1 mm and/or 10 mm.

Preferably, the x-value is in a range of from 0.31 to 0.312, more preferably from 0.31 to 0.311 at a sample thickness of 1 mm and/or 10 mm. Preferably, the y-value is in a range of from 0.316 to 0.318 at a sample thickness of 1 mm and/or 10 mm. Preferably, the y-value is in a range of from 0.316 to 0.317 at a sample thickness of 1 mm and/or the y-value is in a range of from 0.317 to 0.318 at a sample thickness of 10 mm. Preferably, the x-value is in a range of from 0.31 to 0.312, more preferably from 0.31 to 0.311 at a sample thickness of 1 mm and/or 10 mm and the y-value is in a range of from 0.316 to 0.318 at a sample thickness of 1 mm and/or 10 mm. Preferably, the x-value is in a range of from 0.31 to 0.312, more preferably from 0.31 to 0.311 at a sample thickness of 1 mm and/or 10 mm and the y-value is in a range of from 0.316 to 0.317 at a sample thickness of 1 mm and/or in a range of from 0.317 to 0.318 at a sample thickness of 10 mm.

Generally, the y-value may be higher at a sample thickness of 10 mm as compared to a sample thickness of 1 mm. For example, the difference of the y-value at a sample thickness of 10 mm and the y-value at a sample thickness of 1 mm may be in a range of from 0.0005 to 0.002, more preferably from 0.00075 to 0.0015.

When reference is made to a "sample thickness", the thickness indicates the thickness of the sample on which the respective parameter can be measured. The sample thickness does not refer to the actual thickness of the glass or a glass article, the thickness of the glass or a glass article is in no way limited to the sample thickness.

Preferably, the glass has a y-value of at most 10 %, more preferably at most 5 %, more preferably at most 1 %, more preferably at most 0.5 % higher at a sample thickness of 10 mm compared to at a sample thickness of 1 mm. Preferably, the y-value is higher at a sample thickness of 10 mm as compared to a sample thickness of 1 mm by 0.1 % to 0.5 %, more preferably by 0.25 % to 0.4 %.

Preferably, the glass has a z-value of at most 10 %, more preferably at most 5 %, more preferably at most 1 %, more preferably at most 0.5 % lower at a sample thickness of 10 mm compared to at a sample thickness of 1 mm. Preferably, the z-value is lower at a sample thickness of 10 mm as compared to a sample thickness of 1 mm by 0.1 % to 0.5 %, more preferably by 0.15 % to 0.4 %.

Preferably, the glass has an average linear thermal expansion coefficient CTE in the temperature range between 25°C and 300°C of more than 3*10⁻⁶/°C.

Preferably, the glass of the invention has a thickness of from 0.1 to 5 mm, more preferably of from 0.4 to 2.5 mm. Preferably, the glass of the invention is a glass tube, in particular a glass tube having a wall thickness of from 0.1 to 5 mm, more preferably of from 0.4 to 2.5 mm.

The glass of the invention has an excellent hydrolytic resistance. In particular, the glass has a hydrolytic resistance class I (HGA1 according to ISO 720-1985 (E) or type I according to USP660/Glass Grains). The high hydrolytic resistance of the glasses of the invention is particularly advantageous for use as pharmaceutical packaging.

The HGA1 limit of ISO 720-1985 (E) corresponds to 62 µg Na₂O equivalent per g of glass grains. This means that glasses having an equivalent of alkali expressed as mass of sodium oxide (Na₂O) per gram of glass grains in the test of ISO 720-1985 (E) of up to and including 62 µg/g are classified as HGA1. The term "HGA" stands for the hydrolytic resistance of glass grains according to the autoclave method.

The glasses of the present invention have such an excellent hydrolytic resistance that they are even substantially better than the HGA1 limit, meaning that the corresponding Na₂O equivalent of the glasses of the invention in the test of ISO 720-1985 (E) is substantially lower than 62 µg Na₂O per gram glass grains. This can be expressed as a percentage of the HGA1 limit. For example, 62 µg Na₂O per gram of glass grains corresponds to 100% of the HGA1 limit. Likewise, a result of 46.5 µg Na₂O per gram glass grains in the test of ISO 720-1985 (E) corresponds to 75% of the HGA1 limit. Notably, the lower the percentage of the HGA1 limit is, the better is the hydrolytic resistance of the glass.

Preferably, the glass of the invention has a hydrolytic resistance corresponding to less than 75%, more preferably at most 74%, more preferably at most 73%, more preferably at most 72%, more preferably at most 71%, more preferably at most 70%, more preferably at most 69%, more preferably at most 68%, more preferably at most 67%, more preferably at most 66%, more preferably at most 65% of the HGA1 limit according to ISO 720-1985 (E). The glass of the invention may for example have a hydrolytic resistance corresponding to at least 40%, at least 45%, at least 50%, at least 55%, or at least 60% of the HGA1 limit according to ISO 720-1985 (E). Preferably, the glass of the invention has a hydrolytic resistance corresponding to 40% to 75%, for example from 40% to 74%, from 40% to 73%, from 40% to 72%, from 40% to 71%, from 40% to 70%, from 40% to 69%, from 45% to 68%, from 50% to 67%, from 55% to 66%, or from 60% to 65% of the HGA1 limit according to ISO 720-1985 (E).

The glass of the invention has very low devitrification tendency. The present disclosure uses the terms "devitrification tendency" on the hand, and "devitrification resistance" on the other hand. The term "devitrification tendency" refers to the tendency of the glass to devitrify. The term "devitrification resistance" refers to the resistance of the glass to devitrification. Thus, a low devitrification tendency is associated with a high devitrification resistance and *vice versa.*

Preferably, the glass does not devitrify at a temperature of from 800°C to 1500°C, for example from 1035°C to 1405°C.

The devitrification resistance may be expressed in terms of KGₘₐₓ. The lower KGₘₐₓ, the higher the devitrification resistance. KGₘₐₓ means the maximum crystallization rate in µm/min. The measurement of the crystallization rate is well known. The crystallization rate is measured along the formed crystals, i.e. at their greatest extension. In particular, the crystallization rate is determined upon subjecting the glass to gradient tempering (for example using a gradient furnace).

The so-called lower devitrification temperature (LDT) is the temperature at which devitrification starts in an increasing temperature regimen. Above the liquidus temperature (also called upper devitrification temperature (UDT)) crystals do not occur even after longer times. The values of LDT and UDT generally differ between different glasses. The terms "crystallization" and "devitrification" are used synonymously herein if not indicated otherwise.

If there is crystallization, it occurs at temperatures above the lower devitrification temperature (LDT) and below the upper devitrification temperature (UDT), thus in a range between LDT and UDT. Consequently, the temperature at which the crystallization rate has its maximum value is between LDT and UDT. The glass has to be heated to temperatures between LDT and UDT in order to determine KGₘₐₓ. Generally, different temperatures within the range of from LDT to UDT are tested because it is often unknown at which temperatures exactly the maximum crystallization occurs. This also enables determining LDT and UDT as the lower limit and upper limit, respectively, of the temperature range in which crystallization occurs.

The crystallization rate is preferably determined by thermally treating the glass for a time of one hour in a gradient furnace with increasing temperature regimen. A gradient furnace is a furnace having different heating zones, thus a furnace having areas of different temperatures. Increasing temperature regimen means that prior to be put into the furnace the temperature of the glass is lower than the temperature in any area of the furnace. Thus, the temperature of the glass is increased by putting it into the furnace independent of which area of the furnace the glass is put into. Hence, measurement of devitrification is preferably done by thermal treatment for one hour in a (preheated) gradient furnace that has zones of different temperatures. It is a location-based gradient, not a time-based gradient, because the gradient furnace is divided into locations or zones of different temperatures.

The furnace being divided into several heating zones enables testing different temperatures at the same time. This is a particular advantage of a gradient furnace. For example, the lowest temperature may be 800°C and the highest temperature may be 1500°C, or the lowest temperature may be 1035°C and the highest temperature may be 1405°C. The temperatures shall be chosen such that the crystallization rate can be determined at different temperatures in the range between LDT and UDT so that comparison of potentially different crystallization rates in that range enables determining KGₘₐₓ as the maximum crystallization rate. If LDT and UDT are unknown, it is preferred that temperatures in a relatively large range are tested in order to enable determination of LDT and UDT. For example, the lowest temperature in the gradient furnace may be chosen such that it is about 350 K below the processing temperature (VA) of the glass.

Preferably, the glasses of the invention are so devitrification resistant that KGₘₐₓ is preferably at most 0.75 µm/min, more preferably at most 0.6 µm/min , more preferably at most 0.5 µm/min , more preferably at most 0.4 µm/min, more preferably at most 0.3 µm/min, more preferably at most 0.2 µm/min, more preferably at most 0.1 µm/min, more preferably at most 0.05 µm/min, more preferably at most 0.02 µm/min, more preferably at most 0.01 µm/min in a temperature range of from 800°C to 1500°C, for example from 1035°C to 1405°C, when the glass is thermally treated for 60 minutes in a gradient furnace with increasing temperature regimen. Most preferably, no devitrification occurs at all. Importantly, if no devitrification occurs at all during gradient tempering, KGₘₐₓ cannot be determined. No devitrification may also be expressed as KGₘₐₓ = 0 µm/min.

Notably, the fact that a glass has a maximum crystallization rate (KGₘₐₓ) of at most 1.0 µm/min or the like in a temperature range of from 800°C to 1500°C when the glass is thermally treated for 60 minutes in a gradient furnace with increasing temperature regimen does not mean that the gradient furnace has to cover the entire range of from 800°C to 1500°C. For example, if it is known for a given glass that UDT is 1405°C, temperatures of more than 1405°C do not have to be tested in the gradient furnace because there is no crystallization at such temperatures so that the maximum crystallization rate KGₘₐₓ has to be at temperatures below 1405°C.

Preferably, the crystallization rate is determined using glass grains, in particular glass grains of 1.6 mm to 4 mm diameter. Such glass grains are preferably put onto a carrier, such as a platinum carrier for the gradient tempering. For example, the carrier may have depressions, each for taking up a glass grain, and a hole at the bottom of each depression so that the crystallization rate can be determined microscopically. In view of the preferred sizes of glass grains the depressions preferably have a diameter of 4 mm each and the holes preferably have a diameter of 1 mm each.

Subsequent to the thermal treatment it can be determined microscopically which crystallization rate occurred in which temperature range. The highest crystallization rate that is determined is the maximum crystallization rate KGₘₐₓ. LDT and UDT may be determined as lower limit and upper limit, respectively, of the temperature range in which crystallization occurred. The different glass grains can easily be assigned to the different temperature zones of the gradient furnace because it is known which position in the furnace has which temperature and which glass grain was located at which position in the furnace during the thermal treatment.

Preferably, the glass of the invention has an acid resistance corresponding to class S3 or better, more preferably S2 or better, more preferably S1 according to DIN 12116 : 2001-03.

Preferably, the glass of the invention has an alkaline resistance corresponding to class A2 or better, more preferably class A1 according to ISO 695:1991(E).

The present invention also relates to the use of a glass of the invention for the production of vessels, in particularly pharmaceutical vessels.

In an aspect, the present invention relates to a method for the production of a glass of the invention comprising the steps:
melting of glass raw materials,
cooling of the obtained glass.

In an aspect, the present invention relates to a method for the production of a glass of the invention comprising the step
processing a glass melt, in particular by means of down draw, overflow fusion, redrawing, floating or a tube drawing method, in particular the Danner process, the Vello process or Vertical draw.

The glass of the invention can be in any form. The glass according to the invention can be, for example, a glass container, a glass sheet, a glass plate, a glass rod, a glass tube, a glass block or another article that is useful in, for example, the pharmaceutical or medical field.

The invention also relates to pharmaceutical primary packaging comprising the glass of the invention. The pharmaceutical primary packaging is preferably selected from bottles, for example large or small bottles, such as injection bottles or vials, ampoules, cartridges, bottles, flasks, phials, beakers or syringes.

The term "pharmaceutical primary packaging" is to be understood as packaging made of glass that comes into direct contact with a medicament. The packaging protects the medicament from environmental influences and maintains the medicament according to its specification until it is used by the patient.

The glass in the form of glass containers can be used as pharmaceutical primary packaging. The glass may be in contact with liquid contents such as active ingredient solutions, solvents, e.g. buffer systems, or the like, which may have a pH in range from 1 to 11, in the pH range from 4 to 9, or in the pH range from 5 to 7. The glasses show particularly good chemical resistance and are therefore particularly suitable for storage or preservation of these contents. A particularly good chemical resistance in the context of the present invention means that the glasses meet the requirements for storage and preservation of liquid contents applicable to the pharmaceutical sector to a high degree, in particular that the glasses have a hydrolytic resistance corresponding to hydrolytic class 1 according to ISO 720 or USP660.

The glasses according to the invention are suitable for the manufacture of pharmaceutical containers which are in contact with their contents and can therefore be provided for the storage and preservation of those contents. Contents that may be used are, for example, all solid and liquid compositions used in the pharmaceutical field.

The properties of the glass make it very suitable for the widest variety of applications, such as e.g. use as pharmaceutical primary packaging such as cartridges, syringes, ampoules or vials, since the substances stored in the containers, in particular aqueous solutions, do not attack the glass to any appreciable extent.

The invention also relates to a pharmaceutical product, including the glass of the invention, and a drug formulation. The drug formulation may contain a biological drug, such as an antibody, enzyme, protein, peptide or the like, and one or more pharmaceutically acceptable excipients.

The glass in accordance with the invention may also be an intermediate product in the manufacture of another glass article, such as tubular glass in the form of semi-finished products, for example for further processing into pharmaceutical primary packaging.

In the following, the present invention is described in greater detail with reference to example embodiments and comparative examples, which illustrate the teaching of the invention but are not intended to restrict it.

### Examples

The composition of the following examples and comparative examples is given in mol% based on oxides.

**Table 1**

| **Component** | **Ex. 1** | **Ex. 2** | **Ex. 3** | **Ex. 4** | **Ex. 5** | **C1** | **C2** | **C3** |
|---|---|---|---|---|---|---|---|---|
| SiO₂ | 69.5 | 69.5 | 67.4 | 68.2 | 69.8 | 65.1 | 67.2 | 61.3 |
| Al₂O₃ | 10.0 | 10.0 | 9.8 | 8.9 | 8.2 | 9.4 | 11.9 | 9.5 |
| Na₂O | 0.3 | 1.5 | 2.5 | 2.5 | 1.7 | 5.1 | 2.9 | 2.0 |
| K₂O | | | 2.3 | 2.3 | 2.0 | | 1.8 | 1.1 |
| MgO | 2.3 | 2.5 | 2.6 | 2.6 | 3.0 | 4.1 | 2.3 | 7.5 |
| CaO | 13.1 | 13.0 | 5.4 | 5.4 | 5.1 | 12.0 | 4.9 | 17.2 |
| SrO | 0.05 | 2.5 | 8.0 | 8.1 | 8.1 | 0.04 | 7.2 | |
| BaO | 4.1 | 0.5 | 0.05 | 0.1 | 0.1 | 3.7 | 0.06 | |
| ZrO₂ | | | 1.5 | 1.5 | 1.5 | 0.02 | 1.4 | 1.0 |
| Cl | 0.6 | 0.5 | 0.4 | 0.4 | 0.4 | 0.6 | 0.3 | 0.3 |
| Fe₂O₃ | 0.01 | 0.01 | 0.01 | 0.01 | 0.01 | 0.01 | 0.01 | 0.01 |
| ZnO | | | | | 0.05 | | | |

The following table 2 summarizes the devitrification resistance (in terms of KGₘₐₓ (=maximum crystallization rate in µm/min)) as well as the hydrolytic resistance according to ISO 720-1985 (E) given as equivalent of alkali expressed as µg Na₂O per gram of glass grains for example glasses Ex. 1 to 5 and comparative example C1 to C3 whose compositions are shown above in table 1.

**Table 2**

| | **Ex. 1** | **Ex. 2** | **Ex. 3** | **Ex. 4** | **Ex. 5** | **C1** | **C2** | **C3** |
|---|---|---|---|---|---|---|---|---|
| KGₘₐₓ [µm/min] | 0 | 0.3 | 0.2 | 0.3 | 0 | 1.2 | 0.8 | 0.6 |
| Hydrolytic resistance (ISO720), [µg Na₂O equiv. per gram of glass grains] | 36.8 | 40.2 | 36.3 | 38.2 | 32.3 | 57.1 | 37.1 | 63.0 |
| Percentage of HGA1 limit | 59% | 65% | 59% | 62% | 52% | 92% | 60% | 102% |

Importantly, if no devitrification occurs at all during gradient tempering, KGₘₐₓ cannot be determined. No devitrification may also be expressed as KGₘₐₓ = 0 µm/min (see Ex. 1 and Ex. 5 in table 2). Examples 1 to 5 as well as comparative example C2 have excellent hydrolytic resistance. Compar ative examples C1 and C3 have a comparably low hydrolytic resistance. Examples 1 to 5 have a very low devitrification tendency. In contrast, the devitrification tendency is higher in the comparative examples, in particular in C1 and C2.

## Claims

1. A glass comprising the following components in the indicated amounts (in mol%):
| **Component** | **Min** | **Max** |
|---|---|---|
| SiO₂ | 64.5 | 73.0 |
| Al₂O₃ | 4.0 | 11.0 |
| B₂O₃ | 0 | 0.2 |
| Na₂O | 0 | 3.5 |
| K₂O | 0 | 4.0 |
| MgO | 0.1 | 7.0 |
| CaO | 3.0 | 15.0 |
| SrO | 0 | 10.0 |
| BaO | 0 | 5.0 |
| ZnO | 0 | 0.5 |
| R₂O | 0.1 | 7.5 |
| RO | >15.0 | 22.5 |
wherein R₂O indicates the sum of the molar amounts of Na₂O and K₂O, and wherein RO indicates the sum of the molar amounts of MgO, CaO, SrO, BaO and ZnO.

2. The glass according to claim 1, wherein the ratio of the molar amount of RO and the molar amount of Al₂O₃ is in a range of from 1.4:1 to 5:1.

3. The glass according to at least one of the preceding claims, wherein the ratio of the molar amount of SiO₂ to the molar amount of RO is in a range of from 3:1 to 4.5:1.

4. The glass according to at least one of the preceding claims, wherein the ratio of the molar amount Al₂O₃ and the molar amount of CaO is in a range of from 0.3:1 to 3:1.

5. The glass according to at least one of the preceding claims, wherein the molar amount of TiO₂ is at most 0.5 mol% and/or wherein the molar amount of Li₂O is at most 0.5 mol%.

6. The glass according to at least one of the preceding claims, wherein the molar amount of ZrO₂ is at most 6.0 mol%.

7. The glass according to at least one of the preceding claims, wherein the ratio of the molar amount of R₂O and the molar amount of Al₂O₃ is at most 1:1.

8. The glass according to at least one of the preceding claims, wherein the ratio of the molar amount of RO and the molar amount of R₂O is at least 2.5:1.

9. The glass according to at least one of the preceding claims, wherein the sum of the molar amounts of R₂O and BaO is at in a range of from 0.75 to 7.0 mol%.

10. The glass according to at least one of the preceding claims, wherein the molar amount of MoOs is less than 100 ppm.

11. The glass according to at least one of the preceding claims, wherein the glass comprises the following components in the indicated amounts (in mol%):
| **Component** | **Min** | **Max** |
|---|---|---|
| SiO₂ | 66.5 | 71.0 |
| Al₂O₃ | 7.0 | 10.5 |
| B₂O₃ | 0 | 0.1 |
| Na₂O | 0.1 | 3.0 |
| K₂O | 0 | 3.0 |
| MgO | 1.0 | 4.0 |
| CaO | 4.0 | 14.0 |
| SrO | 0 | 9.0 |
| BaO | 0 | 4.5 |
| ZnO | 0 | 0.1 |
| R₂O | 0.1 | 5.5 |
| RO | 15.5 | 21.5 |

12. The glass according to at least one of the preceding claims, wherein the glass has a hydrolytic resistance corresponding to less than 75% of the HGA1 limit according to ISO 720-1985 (E).

13. The glass according to at least one of the preceding claims, wherein the maximum crystallization rate KGₘₐₓ is at most 0.75 µm/min in a temperature range of from 1035°C to 1405°C, when the glass is thermally treated for 60 minutes in a gradient furnace with increasing temperature regimen.

14. A method for the production of a glass according to at least one of the preceding claims, the method comprising the step of processing a glass melt by means of down draw, overflow fusion, redrawing, floating or a tube drawing method.

15. A use of a glass according to at least one of claims 1 to 13 as a pharmaceutical primary packaging.
